# EUROPÄISCHE PATENTANMELDUNG

(11) **EP 3 756 823 A1**
(43) Veröffentlichungstag der Anmeldung: **30.12.2020**
(21) Anmeldenummer: 19182950.6
(22) Anmeldetag: 27.06.2019
(51) Int. Cl.: B23Q 11/04, B23Q 17/09, B23Q 17/10, B23B 49/00, B28D 1/04, B28D 7/00, B25F 5/00

(54) **VERFAHREN ZUR ERKENNUNG EINES ZUSTANDS EINER WERKZEUGMASCHINE, SOWIE EINE WERKZEUGMASCHINE**

(71) Anmelder: Hilti Aktiengesellschaft, 9494 Schaan (LI)
(72) Erfinder: Sattler, Christian, 87640 Biessenhofen (DE); Balter, Marco, 6800 Feldkirch (AT); Fritsch, Frank, 86916 Kaufering (DE)
(74) Vertreter: Hilti Aktiengesellschaft Corporate Intellectual Property

(57) **Zusammenfassung**

Die vorliegende Erfindung betrifft ein Verfahren zur Erkennung eines Zustands einer Werkzeugmaschine, sowie eine Werkzeugmaschine, das dazu eingerichtet ist, das vorgeschlagene Verfahren auszuführen. Dazu umfasst die Werkzeugmaschine insbesondere einen Motor als Antrieb für die Werkzeugmaschine, eine Steuerungseinrichtung, eine Getriebeeinrichtung, einen ersten Sensor zum Erfassen einer ersten Geschwindigkeit der Getriebeeinrichtung, einen zweiten Sensor zum Erfassen einer Geschwindigkeit des Motors, sowie einen dritten Sensor zum Erfassen von Stromwerten. Bei dem vorgeschlagenen Verfahren werden insbesondere Geschwindigkeits- und Stromwerte verwendet, um den Zustand der Werkzeugmaschine zu erkennen. Das Verfahren kann insbesondere dazu verwendet werden, das Auslösen einer Rutschkupplung der Werkzeugmaschine zu erkennen.

## Beschreibung

Die vorliegende Erfindung betrifft ein Verfahren zur Erkennung eines Zustands einer Werkzeugmaschine, sowie eine Werkzeugmaschine, das dazu eingerichtet ist, das vorgeschlagene Verfahren auszuführen. Dazu umfasst die Werkzeugmaschine insbesondere einen Motor als Antrieb für die Werkzeugmaschine, eine Steuerungseinrichtung, eine Getriebeeinrichtung, einen ersten Sensor zum Erfassen einer ersten Geschwindigkeit der Getriebeeinrichtung, einen zweiten Sensor zum Erfassen einer ersten Geschwindigkeit des Motors, sowie einen dritten Sensor zum Erfassen von Stromwerten. Bei dem vorgeschlagenen Verfahren werden insbesondere Geschwindigkeits- und Stromwerte verwendet, um den Zustand der Werkzeugmaschine zu erkennen. Das Verfahren kann insbesondere dazu verwendet werden, das Auslösen einer Rutschkupplung der Werkzeugmaschine zu erkennen und mit geeigneten Maßnahmen darauf zu reagieren.

Es sind im Stand der Technik Werkzeugmaschinen bekannt, die über mechanische Rutschkupplungen oder Sicherheitskupplungen verfügen. Allerdings zeigen diese konventionellen Werkzeugmaschinen starke Abnutzungs- und Verschleißerscheinungen, je nachdem wie oft die Rutsch- oder Sicherheitskupplung ausgelöst hat bzw. wie lange die entsprechenden Auslöseereignisse angedauert haben. Eine weitere unerwünschte Folge dieser Abnutzungs- und Verschleißerscheinungen ist es, dass das Auslöse-Drehmoment der Rutschkupplung, und damit auch die Leistung der Werkzeugmaschine als Ganzes, im Laufe der Zeit abnimmt. Dies liegt unter anderem daran, dass das verringerte Auslöse-Drehmoment dazu führt, dass es zu immer mehr Auslöse-Ereignissen kommt, was sich beispielsweise nachteilig auf die Betriebszeit der Werkzeugmaschine auswirkt, da die Werkzeugmaschine in den auslösebedingten Standzeiten nicht verwendet werden kann. Es wäre daher wünschenswert, wenn Verfahren bereitgestellt werden könnten, mit denen das Auslösen von Rutschkupplungen sicher erkannt werden könnte, um Geräte, bei denen beispielsweise eine bestimmte Anzahl an Auslöseereignissen überschritten wird, zur Wartung einzubestellen.

Einige Werkzeuggeräte oder Werkzeugmaschinen werden in Verbindung mit einer automatischen Vorschubeinrichtung verwendet. Solche Systeme werden beispielsweise als *auto feed* bezeichnet. Wenn eine elektrische Werkzeugmaschine zusammen mit einer automatischen Vorschubeinrichtung verwendet wird, kann der durch die Vorschubeinrichtung gesteuerte automatische Prozess gegebenenfalls nicht auf die gewünschte Art und Weise fortgesetzt und/oder beendet werden, wenn es zu einem Auslöseereignis der Rutschkupplung kommt.

Beispielsweise werden solche auto feed-Vorrichtungen in Verbindungen mit solchen Werkzeugmaschinen verwendet, die als Kernbohrgeräte ausgebildet sind. Werkzeugmaschinen, wie z.B. Kernbohrmaschinen, dienen im Allgemeinen dazu Löcher in mineralische Werkstoffe, wie z.B. Beton oder Ziegel, zu schneiden. Das Kernbohrgerät enthält dafür üblicherweise eine Werkzeugaufnahme sowie ein Werkzeug, beispielsweise in Form einer Bohrkrone. Ein Motor treibt über eine Getriebeeinrichtung die Werkzeugaufnahme samt Werkzeug zu einer Drehbewegung an. Die in eine Drehbewegung versetzte Bohrkrone schneidet mit Hilfe des diamantenbesetzen Bohrkronenschneiderands ein ringförmiges Loch in den Werkstoff, wodurch ein zylindrischer Bohrkern entsteht. Dieser Bohrkern wird nach Beendigung des Bohr- bzw. Schneidevorgangs aus dem Bohrloch entfernt.

Bisher stehen keine zuverlässigen Daten über das Auslösen von Rutschkupplungen zur Verfügung. Insbesondere war es bisher technisch nicht möglich, solche Daten zu erheben, zu speichern und zu gegebener Zeit auszuwerten. Es wäre jedoch zur Verbesserung und Weiterentwicklung von Rutschkupplungen wünschenswert, wenn solche zuverlässigen Daten zu Verfügung stehen würden, insbesondere solche Daten, die die Anzahl der Auslöseereignisse pro Gerät, die Anzahl der Auslöseereignisse pro gebohrtem Loch oder die Anzahl der Auslöseereignisse pro Jahr beschreiben.

Aufgabe der vorliegenden Erfindung ist es somit, die vorstehend beschriebene Nachteile und Mängel des Standes der Technik zu überwinden und ein Verfahren zur Erkennung eines Zustands einer Werkzeugmaschine, sowie eine das Verfahren umsetzende Werkzeugmaschine bereitzustellen. Mit dem Verfahren soll es beispielsweise ermöglicht werden, zuverlässige Daten über Auslöseereignisse der Rutschkupplung zu sammeln und auszuwerten, da ein Rutschkupplungsereignis im Sinne der Erfindung bevorzugt als ein Ereignis betrachtet wird, dass den Zustand der Werkzeugmaschine beeinflussen kann. Insbesondere sollen mit Hilfe des Verfahrens solche Geräte oder Geräteklassen identifiziert werden, bei denen die Rutschkupplungen besonders häufig auslösen oder die bereits einen bestimmten Grenzwert an Auslöseereignissen erreicht haben. Wenn beispielsweise bestimmte Geräteklassen mit einem erhöhten Auslöserisiko identifiziert werden können, können konkret in Bezug auf diese Geräteklasse Verbesserungsarbeiten vorgenommen werden. Wenn mit Hilfe des Verfahrens einzelne Geräte mit einem erhöhten Auslöse-Risiko identifiziert werden können, könnten die Besitzer dieser Geräte aufgefordert werden, ihre Geräte warten zu lassen oder sonstige Abhilfemaßnahmen zu ergreifen. Aufgabe der Erfindung ist es insbesondere auch, ein Verfahren zur Erkennung eines Rutschkupplung-Auslöseereignisses an solchen Werkzeugmaschinen bereitzustellen, die mit einer automatischen Vorschubeinrichtung zusammenarbeiten.

Die Aufgabe wird durch den Gegenstand der unabhängigen Ansprüche gelöst. Vorteilhafte Ausführungsformen zu dem Gegenstand der unabhängigen Ansprüche finden sich in den abhängigen Unteransprüchen.

### Beschreibung der Erfindung:

Die Aufgabe wird gelöst durch ein Verfahren zur Erkennung eines Zustands einer Werkzeugmaschine, wobei die Werkzeugmaschine einen Motor als Antrieb für die Werkzeugmaschine, eine Steuerungseinrichtung, eine Getriebeeinrichtung, einen ersten Sensor zum Erfassen einer ersten Geschwindigkeit der Getriebeeinrichtung, einen zweiten Sensor zum Erfassen einer ersten Geschwindigkeit des Motors, sowie einen dritten Sensor zum Erfassen von Stromwerten umfasst. Das Verfahren ist durch folgende Verfahrensschritte gekennzeichnet:
a) Ermitteln einer ersten Geschwindigkeit der Getriebeeinrichtung mit dem ersten Sensor,
b) Ermitteln einer ersten Geschwindigkeit des Motors mit dem zweiten Sensor,
c) Ermitteln eines Stromwerts mit dem dritten Sensor,
d) Ermitteln eines Zustands der Werkzeugmaschine unter Verwendung der mit den Sensoren erfassten Geschwindigkeiten und Stromwerte.

In einer ganz besonders bevorzugten Ausführungsform der Erfindung handelt es sich bei der Werkzeugmaschine um eine Kernbohrmaschine bzw. ein Kernbohrgerät. Bei dem Werkzeug der Werkzeugmaschine kann es sich in diesem Fall beispielsweise um eine Bohrkrone handeln. Es ist ganz besonders bevorzugt, dass das vorgeschlagene Verfahren zur Erkennung eines Auslöseereignisses einer Rutschkupplung der Werkzeugmaschine verwendet wird. Es ist in diesem Zusammenhang besonders bevorzugt, dass die Werkzeugmaschine eine Rutschkupplung aufweist. Der Verfahrensschritt d) kann in diesem Fall bedeuten, dass ermittelt wird, ob ein Auslösen der Rutschkupplung der Werkzeugmaschine stattgefunden hat, wobei für diese Ermittlung vorzugsweise auch die von den Sensoren ermittelten Strom- und Geschwindigkeitswerte verwendet werden.

Vorzugsweise kann der Zustand der Werkzeugmaschine durch ein Auslösen der Rutschkupplung der Werkzeugmaschine beeinflusst werden, so dass durch den ermittelten Zustand der Werkzeugmaschine Rückschlüsse darauf gezogen werden können, ob ein Rutschkupplungs-Auslöseereignis vorgelegen hat oder nicht. Insbesondere werden zur Untersuchung, ob ein Rutschkupplungs-Auslöseereignis vorgelegen hat, die Geschwindigkeits- und Stromwerte verwendet, die von den Sensoren der Werkzeugmaschine, vorzugsweise bei deren Betrieb, erfasst werden. Im Falle, dass eine Rutschkupplungs-Auslöseereignis ermittelt wurde, kann als Reaktion darauf bzw. als optionaler Verfahrensschritt e) der Motor der Werkzeugmaschine ausgeschaltet werden. Wenn die Werkzeugmaschine in Verbindung mit einer automatischen Vorschubvorrichtung verwendet wird, kann als Reaktion auf ein Rutschkupplungs-Auslöseereignis die Antriebskraft der Vorschubvorrichtung reduziert werden. Es kann im Sinne der Erfindung auch bevorzugt sein, dass die Vorschubvorrichtung bzw. die Werkzeugmaschine im Wesentlichen vollständig entlastet wird. Darüber hinaus kann nach Erkennung eines Rutschkupplungs-Auslöseereignisses die Bohrkrone aus dem Bohrloch herausgezogen werden, wenn es sich bei der Werkzeugmaschine um ein Kernbohrgerät handelt.

In einer bevorzugten Ausführungsform der Erfindung kann die Werkzeugmaschine mit einer automatischen Vorschubeinrichtung zusammenarbeiten, die vorzugsweise dazu eingerichtet ist, die Werkzeugmaschine in das zu schneidende Material hineinzutreiben. Insbesondere in Zusammenhang mit solchen als *auto feed* bekannte Vorrichtungen führt das vorgeschlagene Verfahren zur Erkennung von Rutschkupplungs-Auslöseereignissen dazu, dass von der Vorschubvorrichtung automatisch gesteuerte Prozesse auf eine gewünschte Weise fortgesetzt oder beendet werden können, nachdem es zu einem Auslösen der Rutschkupplung kam bzw. nachdem ein solches Auslöseereignis durch Ausführung des vorgeschlagenen Verfahrens ermittelt wurde. Es ist insbesondere bevorzugt, dass bei Erkennung eines Rutschkupplung-Auslöseereignisses die Antriebskraft der Vorschubeinrichtung reduziert werden kann, um auf das Auslösen der Rutschkupplung zu reagieren. Zu einem späteren Zeitpunkt kann die Antriebskraft der Vorschubeinrichtung dann wieder erhöht werden, beispielsweise auf das ursprüngliche oder auf ein anderes Niveau.

Darüber hinaus kann das vorgeschlagene Verfahren dazu verwendet werden, Informationen über Auslöseereignisse zu sammeln und auszuwerten. Dadurch kann das Verständnis des Auslösens von Rutschkupplung weiter verbessert werden und die gewonnenen Erkenntnisse können verwendet werden, um die zugrundeliegende Technologie weiter zu optimieren. Es war für die Fachwelt überraschend, dass Geschwindigkeits- und Stromwerte so miteinander kombiniert und bei einer gemeinsamen Auswertung berücksichtigt werden können, um an einer Werkzeugmaschine zu erkennen, ob eine Rutschkupplung ausgelöst hat.

Das vorgeschlagene Verfahren führt vorteilhafterweise zu einer erhöhten Lebenszeit bzw. Nutzungsdauer der Rutschkupplung, sowie zu einer stabilen Leistung der Werkzeugmaschine mit geringen Standzeiten bzw. höheren Laufzeiten. Insbesondere können bei der Verwendung von auto feed-Vorrichtungen hohe Prozess-Erledigungsraten erzielt werden, bei denen Prozesse wie geplant bzw. wie gewünscht abgeschlossen werden können. Tests haben gezeigt, dass die Ausfallzeiten der Werkzeugmaschinen, die das vorgeschlagene Verfahren umsetzen, wesentlich reduziert werden konnten.

Ein weiterer Vorteil der Erfindung besteht darin, dass die Rutschkupplung durch die Erkennung der Rutschkupplungsauslösung in der Auslösedauer begrenzt werden kann. Dies kann beispielsweise dadurch erreicht werden, dass der Motor der Werkzeugmaschine abgeschaltet wird. Durch diese Maßnahmen kann vorteilhafterweise die Lebensdauer der Rutschkupplung erheblich verlängert werden. Diese Lebenszeitverlängerung kann mit dem folgenden Rechenbeispiel verdeutlicht werden: wenn die Häufigkeit der Rutschkupplungsauslösungsereignisse konstant ist und der Anwender früher üblicherweise 20 s in der Rutschkupplungsphase verblieb, das System aber nun die Rutschkupplung bereits nach 10 s ausschaltet, kann beispielsweise eine Verdopplung der Lebenszeit der Rutschkupplung erreicht werden. Die Erkennung der Rutschkupplungsauslösungsereignisse und die entsprechende Begrenzung der Auslösedauer ist besonders vorteilhaft bei Werkzeugmaschinen, die mit einem automatischen Vorschub, wie einer *auto feed-*Vorrichtung, arbeiten bzw. ausgestattet sind. Dies insbesondere deshalb, weil die Werkzeugmaschine ohne Rutschkupplungsauslösungsereigniserkennung möglicherweise in der Rutschkupplungsphase verbleibt und nicht angemessen auf diese Störung reagieren kann.

Es ist im Sinne der Erfindung ganz besonders bevorzugt, dass es sich bei den Stromwerten um das Stromniveau des Motors handelt. Alternativ kann auch die Stromaufnahme des Motors gemessen und als Stromwert im Sinne der Erfindung verwendet werden. Es ist im Sinne der Erfindung ganz besonders bevorzugt, die Messwerte als Stromwerte zu verwenden, die von der Motorelektronik zur Verfügung gestellt werden. Dabei kann es sich zum Beispiel auch um Leistungs- bzw. Spannungswerte handeln, die im Kontext der vorliegenden Erfindung als "Stromwerte" verstanden werden sollen. Beispielsweise kann die Leistungsaufnahme des Motors als Stromwert im Sinne der Erfindung verwendet werden. Ferner können auch die Ergebnisse einer Spannungsmessung zur Auswertung im Rahmen des vorgeschlagenen Verfahrens verwendet werden. Vorzugsweise beschreibt der Begriff "Stromwert" im Sinne der Erfindung einen Wert, der sich aus Messwerten von Strom (I), Spannung (U) und/oder Leistung (P) zusammensetzen kann, wobei der Stromwert vorzugsweise von der Motorelektronik zur Verfügung gestellt wird.

Im Kontext des vorgeschlagenen Verfahrens ermitteln der erste und der zweite Sensor insbesondere Geschwindigkeiten, und zwar vorzugsweise die Geschwindigkeiten der Getriebeeinheit bzw. des Motors. Es ist im Sinne der Erfindung bevorzugt, dass diese Geschwindigkeitswerte mit den Umdrehungszahlen der Getriebeeinheit bzw. des Motors zusammenhängen. Mithin können die Umdrehungszahlen verwendet werden, um die Geschwindigkeiten der Getriebeeinheit bzw. des Motors zu bestimmen. Ferner kann es bevorzugt sein, direkt die Umdrehungszahlen der Getriebeeinheit bzw. des Motors zu verwenden, um zusammen mit den vom dritten Sensor ermittelten Stromwerten zur Feststellung, ob ein Rutschkupplungs-Auslösungsereignis stattgefunden hat, herangezogen zu werden. Es ist im Sinne der Erfindung ganz besonders bevorzugt, die Umdrehungszahlung vor und nach einem Rutschkupplungs-Auslöseereignis zu verwenden, um zu erkennen, ob ein Rutschkupplungs-Auslöseereignis stattgefunden hat. Diese können beispielsweise miteinander verglichen werden. Als Umdrehungszahlen können beispielsweise die Umdrehungszahlen des Motors der Werkzeugmaschine verwendet werden. Es kann aber auch bevorzugt sein, die Umdrehungszahlen eines vom Motor angetriebenen Zahnrads im Getriebe der Werkzeugmaschine zur Auswertung heranzuziehen.

Vorzugsweise werden die Umdrehungszahlen in der Einheit *"rounds per minute"* (*rpm*) erfasst. Beispielsweise können Impulse und Zeiten gemessen werden, die anschließend in Umdrehungszahlung in der Einheit rpm umgerechnet werden können.

In einem weiteren Aspekt betrifft die Erfindung eine Werkzeugmaschine, insbesondere eine Kernbohrmaschine, wobei die Werkzeugmaschine folgende Komponenten umfasst:
- einen Motor als Antrieb für die Werkzeugmaschine,
- eine Steuerungseinrichtung,
- eine Getriebeeinrichtung,
- einen ersten Sensor zum Erfassen einer ersten Geschwindigkeit der Getriebeeinrichtung,
- einen zweiten Sensor zum Erfassen einer ersten Geschwindigkeit des Motors,
- sowie einen dritten Sensor zum Erfassen von Stromwerten.

Die Werkzeugmaschine ist dadurch gekennzeichnet, dass sie dazu eingerichtet ist, mit Hilfe der Geschwindigkeits- und Stromwerte, die von den Sensoren erfasst werden, einen Zustand der Werkzeugmaschine zu erkennen. Die Definitionen, technischen Wirkungen und Vorteile, die für das vorgeschlagene Verfahren beschrieben wurden, gelten für die Werkzeugmaschine und analog. Wenn die Werkzeugmaschine eine Rutschkupplung umfasst, kann der Zustand der Werkzeugmaschine insbesondere dadurch beeinflusst werden, dass ein Rutschkupplung-Auslöseereignis stattgefunden hat oder nicht. Insbesondere ermöglicht die Steuerungseinrichtung der Werkzeugmaschine, dass mit der vorgeschlagenen Werkzeugmaschine erkannt werden kann, dass die Rutschkupplung der Werkzeugmaschine ausgelöst hat. Dazu werden vorzugsweise die Geschwindigkeits- und Stromwerte, die von den Sensoren erfasst werden, in der Steuerungseinrichtung des Kernbohrgeräts ausgewertet. Beispielsweise können die Geschwindigkeits- und Stromwerte, die mit den drei Sensoren ermittelt und an die Steuerungseinrichtung übermittelt werden, mathematisch miteinander verrechnet und/oder kombiniert werden. Darüber hinaus können die Geschwindigkeits- und Stromwerte mit vordefinierten Bedingungen ausgewertet werden. Hierzu können beispielsweise Lookup-Tabellen verwendet werden. Es ist im Sinne der Erfindung ganz besonders bevorzugt, dass insbesondere die Steuerungseinrichtung der Werkzeugmaschine dazu eingerichtet ist, mit Hilfe der Geschwindigkeits- und Stromwerte, die von den Sensoren erfasst werden, einen Zustand der Werkzeugmaschine bzw. ein Rutschkupplung-Auslöseereignis zu erkennen.

Es ist im Sinne der Erfindung bevorzugt, dass die Werkzeugmaschine eine erste Leitung umfasst, die den ersten Sensor mit der Steuerungseinrichtung verbindet. Ferner umfasst die Werkzeugmaschine eine zweite Leitung, die den zweiten Sensor mit der Steuerungseinrichtung verbindet. Darüber hinaus umfasst die Werkzeugmaschine eine dritte Leitung, die den dritten Sensor mit der Steuerungseinrichtung verbindet. Auf diese Weise können die von den drei Sensoren erfassten Daten unverzüglich an die Steuerungseinrichtung übermittelt werden, wo sie ausgewertet und informationstechnologisch weiterverarbeitet werden können. Es ist im Kontext der Erfindung insbesondere bevorzugt, dass die Umdrehungszahl des Motors, die Umdrehungszahl der Abtriebswelle der Werkzeugmaschine und das Stromlevel des Motors miteinander kombiniert werden, um den Zustand der Werkzeugmaschine zu ermitteln, wobei insbesondere Algorithmen und Lookup-Tabellen dazu verwendet werden, um Bedingungen, an denen ein Rutschkupplungs-Auslöseereignis festgemacht werden kann, zu definieren. Wenn ein Rutschkupplungs-Auslöseereignis erkannt wird, kann der Motor der Werkzeugmaschine ausgeschaltet werden. Im Falle, dass die Werkzeugmaschine mit einer automatischen Vorschubeinrichtung zusammenarbeitet, ermöglicht das vorgeschlagene Verfahren, das Auslösen der Rutschkupplung wieder aufzuheben, indem die Antriebskraft (*feed force*) der automatischen Vorschubvorrichtung verringert wird.

Vorzugsweise kann die Werkzeugmaschine auch einen Datenspeicher zum Speichern der Roh- oder verarbeiteten Daten umfassen. In diesem Datenspeicher können vorzugsweise auch Lookup-Tabellen hinterlegt sein, die vorzugsweise zur Auswertung der Daten verwendet werden können, beispielsweise um den Zustand der Werkzeugmaschine zu bestimmen bzw. um festzustellen, ob eine Rutschkupplung der Werkzeugmaschine ausgelöst hat. Der Datenspeicher kann beispielsweise Bestandteil der Steuerungseinrichtung sein. Es kann im Sinne der Erfindung aber auch bevorzugt sein, dass der Datenspeicher an einem anderen Ort an der Werkzeugmaschine angeordnet vorliegt. Für einige Anwendungsfälle kann es bevorzugt sein, dass die mit den Sensoren erfassten Daten nicht innerhalb der Werkzeugmaschine ausgewertet werden sollen, sondern dass eine externe Auswertung der Geschwindigkeits- und Stromwerte erfolgen soll. Vorzugsweise kann die Werkzeugmaschine in diesem Fall Kommunikationsmittel umfassen, die es ermöglichen, die erfassten und gegebenenfalls bereits zumindest teilweise ausgewerteten Daten an einen externen PC, Server, eine Cloud oder einen sonstigen externen Datenspeicher oder eine externe Datenverarbeitungsvorrichtung zu übermitteln. Vorzugsweise sind die Kommunikationsmittel im Sinne der Erfindung auch dazu eingerichtet, die ausgewerteten Daten oder gegebenenfalls daraus abgeleitete Steuerbefehle für die Werkzeugmaschine bzw. für Komponenten der Werkzeugmaschine zu empfangen.

Ein Steuerbefehl kann beispielsweise darin bestehen, dass der Motor der Werkzeugmaschine ausgeschaltet werden soll. Ein Steuerbefehl kann beispielsweise aber auch darin bestehen, dass die Antriebskraft der automatischen Vorschubeinrichtung erhöht oder verringert wird. Ein solcher Steuerbefehl wird vorzugsweise von der Steuerungseinrichtung an die Komponente der Werkzeugmaschine oder an eine externe Vorrichtung versendet, die den Befehl aufführen soll. Dabei kann es sich beispielsweise um den Motor der Werkzeugmaschine oder um die automatische Vorschubeinrichtung als externe Vorrichtung handeln. Die Übermittlung des Steuerbefehls kann vorzugsweise drahtgebunden oder drahtlos erfolgen.

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausführungsform der Werkzeugmaschine
- Fig. 2: Darstellung einer möglichen Ausgestaltung des vorgeschlagenen Verfahrens
- Fig. 3: Darstellung einer möglichen Ausgestaltung des vorgeschlagenen Verfahrens, wenn die Werkzeugmaschine mit einer automatischen Vorschubeinrichtung zusammenarbeitet.

### Ausführungsbeispiele:

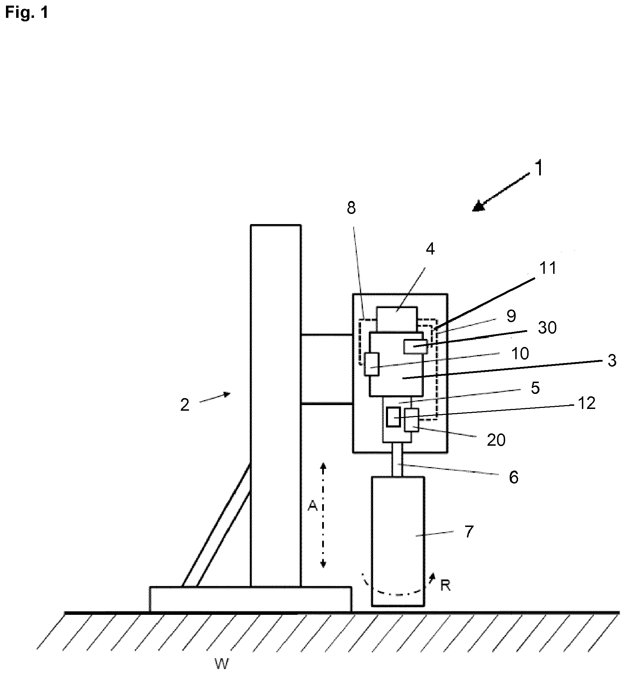

Fig. 1 zeigte eine als Kernbohrmaschine ausgestaltete Werkzeugmaschine 1, die an einem Bohrständer 2 befestigt ist. Mit Hilfe des Bohrständers 2 kann die Werkzeugmaschine 1 entlang der Doppelpfeilrichtung A reversibel auf das zu bearbeitende Werkstück W zu- und wieder wegbewegt werden. Bei dem Werkstoff W handelt es sich beispielsweise um Beton oder eine Platte aus Beton.

Die Werkzeugmaschine 1 enthält einen Motor 3, eine Steuerungseinrichtung 4, eine Getriebeeinrichtung 5, eine Abtriebswelle 6, ein als Bohrkrone ausgestaltetes Werkzeug 7, einen ersten Sensor 10 zum Erfassen einer ersten Geschwindigkeit der Getriebeeinrichtung 5 und einen zweiten Sensor 20 zum Erfassen einer ersten Geschwindigkeit des Motors 3 und einen dritten Sensor 30 zur Erfassung von Strömen. Als Motor 3 kann jegliche Art von Elektromotor eingesetzt werden.

Der Motor 3 ist insbesondere als Elektromotor ausgestaltet und dient zum Antreiben der des Werkzeugs 7 der Werkzeugmaschine 1. Insbesondere kann es sich um eine Bohrkrone 7 handeln. Der Motor 3 kann eine Antriebswelle enthalten, welche mit der Getriebeeinrichtung 5 lösbar verbunden. Die Verbindung kann über eine Kupplung verwirklicht werden. Über die Getriebeeinrichtung 5 und die Abtriebswelle 6 wird die Bohrkrone 7 in eine Drehbewegung versetzt. Das in dem Motor 3 erzeugte Drehmoment wird somit auf die Bohrkrone 7 entsprechend übertragen, um ein Bohrloch in den Werkstoff W zu schneiden.

Die Getriebeeinrichtung 5 ist vorzugsweise zwischen der Antriebswelle des Motors 3 und der Abtriebswelle 6 positioniert. Der erste Sensor 10 ist so an der Getriebeeinrichtung 5 positioniert, dass eine erste Geschwindigkeit der Getriebeeinrichtung 5 erfasst werden kann. Der zweite Sensor 20 ist vorzugsweise so positioniert, dass eine erste Geschwindigkeit des Motors 3 erfasst werden kann. Der dritte Sensor 30 ist vorzugsweise so positioniert, dass Stromwerte des Motors 3 erfasst werden können.

Die Steuerungseinrichtung 4 ist über eine erste Leitung 8 mit dem ersten Sensor 10, über eine zweite Leitung 9 mit dem zweiten Sensor 20 und über eine dritte Leitung 11 mit dem dritten Sensor 30 so verbunden, dass die von den Sensoren 10, 20, 30 gemessenen Geschwindigkeits- und Stromwerte an die Steuerungseinrichtung 4 übertragen werden können. Darüber hinaus ist die Steuerungseinrichtung 4 so mit dem Motor 3 verbunden, dass die Steuerungseinrichtung 4 direkt die Drehzahl bzw. die Geschwindigkeit des Motors 3 variieren kann. Die Steuerungseinrichtung 4 kann vorzugsweise einen Datenspeicher umfassen, in dem Lookup-Tabellen (Übersetzungstabellen) hinterlegt sein können. Durch Verwendung dieser Lookup-Tabellen oder durch die Anwendung von Algorithmen kann ein Zustand der Werkzeugmaschine 1 ermittelt werden, wobei bei der Ermittlung des Zustands insbesondere die von den Sensoren 10, 20, 30 gemessenen Geschwindigkeits- und Stromwerte zugrunde gelegt werden. Diese Zustandsermittlung wird im Sinne der Erfindung vorzugsweise auch als Auswertung der durch die Sensoren 10, 20, 30 erfassten Daten bezeichnet. Es ist im Sinne der Erfindung ganz besonders bevorzugt, dass der Zustand der Werkzeugmaschine 1 unter Verwendung der Lookup-Tabelle, die Geschwindigkeitsverhältnisse und Stromwerte beinhalten, ermittelt wird. Die Auswertung der Daten erfolgt vorzugsweise in der Steuerungseinheit 4 der Werkzeugmaschine 1. Die Auswertung kann beispielsweise das Nachschlagen von Werten in den Lookup-Tabellen umfassen, sowie die Anwendung mathematischer Algorithmen, den Vergleich von Daten oder die Kombination von Werten. Beispielsweise können Zustandswerte oder -größen berechnet werden, die den Zustand der Werkzeugmaschine 1 charakterisieren. Diese Zustandswerte können beispielsweise mit Grenz- oder Schwellwerten, die in den Lookup-Tabellen niedergelegt sind, verglichen werden.

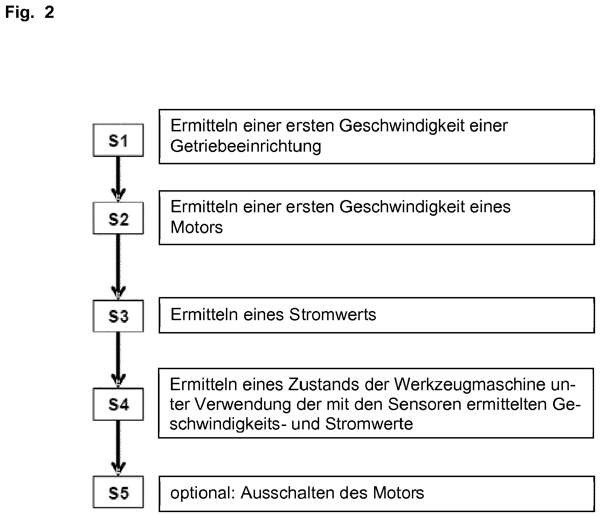

Fig. 2 zeigt beispielhaft einen möglichen Ablauf des vorgeschlagenen Verfahrens.

Hierzu wird im Schritt **S1** zunächst durch den ersten Sensor 10 eine erste Geschwindigkeit der Getriebeeinrichtung 5 ermittelt.

Im Schritt **S2** wird durch den zweiten Sensor 20 eine erste Geschwindigkeit des Motors 3 ermittelt.

Im Schritt **S3** werden durch den dritten Sensor 30 Stromwerte des Motors 3 ermittelt.

Im Schritt **S4** wird ein Zustand der Werkzeugmaschine 1 unter Verwendung der mit den Sensoren 10, 20, 30 erfassten Geschwindigkeiten und Stromwerte ermittelt. Der Zustand der Werkzeugmaschine 1 kann beispielsweise durch ein Auslösen der Rutschkupplung 12 beeinflusst werden. Mit anderen Worten können die von den Sensoren 10, 20, 30 erfassten Geschwindigkeits- und Stromwerte durch Auswertung der Werte dazu verwendet werden, um festzustellen, ob eine Rutschkupplung 12 in einer Werkzeugmaschine 1 ausgelöst hat oder nicht.

Im optionalen Schritt **S5** wird der Motor 3 der Werkzeugmaschine 1 je nach ermitteltem Zustand ausgeschaltet oder die Werkzeugmaschine 1 wird weiter betrieben. Beispielsweise kann es in einigen Anwendungsfällen bevorzugt sein, die Werkzeugmaschine 1 auszuschalten, wenn ein Auslösen der Rutschkupplung 12 der Werkzeugmaschine festgestellt 1 wurde. Insofern stellt Verfahrensschritt **S5** einen optionalen Verfahrensschritt dar, der insbesondere dann vorgenommen wird, wenn ein Ausschalten des Motors 3 in Anbetracht des ermittelten Zustands der Werkzeugmaschine (Verfahrensschritt **S4**) erforderlich bzw. angeraten erscheint. Dies kann insbesondere im Falle eines Rutschkupplungs-Auslöseereignisses der Fall sein. Der Bewertungsmaßstab für das Ausschalten des Motors können Kombinationen von Geschwindigkeits- und Stromwerten sein, die in den Lookup-Tabellen hinterlegt sind. Es können aber auch Berechnungen, Wertevergleiche oder Datenkombinationen herangezogen werden, um zu bestimmen, ob der Motor 3 der Werkzeugmaschine 1 ausgeschaltet werden soll, beispielsweise dann, wenn die Rutschkupplung 12 der Werkzeugmaschine 1 ausgelöst wurde.

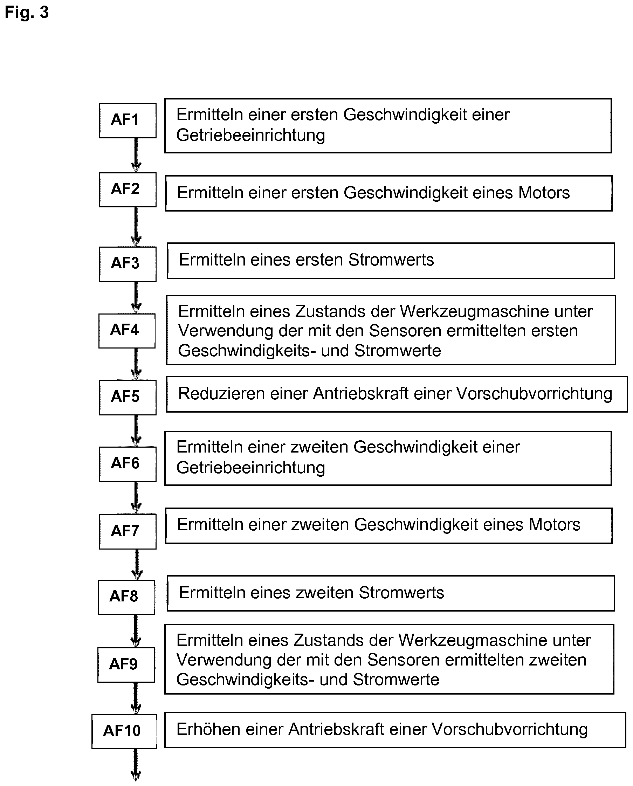

Fig. 3 zeigt beispielhaft einen möglichen Ablauf des vorgeschlagenen Verfahrens, wenn die Werkzeugmaschine 1 mit einer automatischen Vorschubeinrichtung (*"auto feed"*) zusammenarbeitet. Hier verlaufen die ersten Verfahrensschritte **AF1** bis **AF4** im Wesentlichen analog zu dem in Fig. 2 dargestellten Verfahren, insbesondere den Verfahrensschritte **S1** bis **S4.**

In einem Verfahrensschritte **AF5** wird eine Antriebskraft der automatischen Vorschubeinrichtung reduziert. Diese Reduzierung der Antriebskraft der automatischen auto feed-Vorrichtung kann beispielsweise in Abhängigkeit von dem in Schritt **AF4** ermittelten Zustand der Werkzeugmaschine 1 erfolgen oder in Abhängigkeit von den in den Schritten **AF1** bis **AF3** durch die Sensoren 10, 20, 30 ermittelten Geschwindigkeits- und Stromwerten. Es ist im Sinne der Erfindung ganz besonders bevorzugt, dass die Antriebskraft der automatischen Vorschubeirichtung als Reaktion darauf reduziert wird, dass - beispielsweise im Verfahrensschritt **AF4** - ein Rutschkupplungs-Auslöseereignis detektiert wurde.

In den Schritten **AF6** bis **AF8** werden dann mit den Sensoren 10, 20, 30 zweite Geschwindigkeits- und Stromwerte ermittelt. Diese zweiten Geschwindigkeits- und Stromwerte werden insbesondere bei Betrieb der Werkzeugmaschine 1 mit der reduzierten Antriebskraft der automatischen Vorschubeinrichtung ermittelt. Es ist im Sinne der Erfindung bevorzugt, dass mit den zweiten Geschwindigkeits- und Stromwerten ein Zustand der Werkzeugmaschine 1 erkannt wird, bei dem beispielsweise eine Bohrung fortgesetzt bzw. fortgeführt wird. Dies geschieht insbesondere dann, wenn das System umfassend die Werkzeugmaschine 1 auf das Ruschkupplungs-Auslöseereignis reagiert hat und die Bedingungen, die zum Auslösen der Rutschkupplung 12 geführt haben, geändert wurden.

Insbesondere wird in Verfahrensschritt **AF6** mit dem ersten Sensor 10 eine zweite Geschwindigkeit der Getriebeeinrichtung 5 erfasst. In Verfahrensschritt **AF7** wird mit dem zweiten Sensor 20 ein zweiter Geschwindigkeitswert des Motors 30 erfasst, während in **AF8** mit dem dritten Sensor 30 ein zweiter Stromwert ermittelt wird. Die so ermittelten zweiten Geschwindigkeits- und Stromwerte können durch die Sensoren 10, 20, 30 an die Steuerungseinrichtung 4 übermittelt werden, wobei dazu vorzugsweise die erste Leitung 8, die zweite Leitung 9 und die dritte Leitung 11 verwendet werden. Mit der Steuerungseinrichtung 4 können die von den Sensoren 10, 20, 30 erfassten Daten ausgewertet werden.

Insbesondere kann in Verfahrensschritt **AF9** ein zweiter Zustand der Werkzeugmaschine 1 bestimmt werden, und zwar unter Verwendung der von den Sensoren 10, 20, 30 übermittelten zweiten Geschwindigkeits- und Stromwerte. Dieser zweite Zustand beschreibt vorzugsweise den Zustand der Werkzeugmaschine 1, wenn die automatische Vorschubeinrichtung mit reduzierter Antriebskraft arbeitet. Eine Änderung des Zustands der Werkzeugmaschine 1 kann beispielsweise durch ein Auslöseereignis der Rutschkupplung 12 der Werkzeugmaschine 1 eintreten.

In Verfahrensschritt **AF10** kann die Antriebskraft der automatischen Vorschubeinrichtung erhöht werden, dies vorzugsweise in Abhängigkeit von dem in Schritt **AF9** ermittelten zweiten Zustand der Werkzeugmaschine 1.

### Bezugszeichenliste

- 1: Werkzeugmaschine, z. B. eine Kernbohrmaschine
- 2: Bohrständer
- 3: Motor
- 4: Steuerungseinrichtung
- 5: Getriebeeinrichtung
- 6: Antriebswelle
- 7: Werkzeug für die Werkzeugmaschine, z.B. eine Bohrkrone
- 8: erste Leitung
- 9: zweite Leitung
- 10: erster Sensor
- 11: dritte Leitung
- 12: Rutschkupplung
- 20: zweiter Sensor
- 30: dritter Sensor

## Patentansprüche

1. Verfahren zur Erkennung eines Zustands der Werkzeugmaschine (1), wobei die Werkzeugmaschine (1) einen Motor (3) als Antrieb für die Werkzeugmaschine (1), eine Steuerungseinrichtung (4), eine Getriebeeinrichtung (5), einen ersten Sensor (10) zum Erfassen einer ersten Geschwindigkeit der Getriebeeinrichtung (5), einen zweiten Sensor (20) zum Erfassen einer ersten Geschwindigkeit des Motors (3), sowie einen dritten Sensor (30) zum Erfassen von Stromwerten umfasst,
**gekennzeichnet durch die folgenden Verfahrensschritte:**
a) Ermitteln einer ersten Geschwindigkeit der Getriebeeinrichtung (5) mit dem ersten Sensor (10),
b) Ermitteln einer ersten Geschwindigkeit des Motors (3) mit dem zweiten Sensor (20),
c) Ermitteln eines Stromwerts mit dem dritten Sensor (30),
d) Ermitteln eines Zustands der Werkzeugmaschine (1) unter Verwendung der mit den Sensoren (10,20, 30) erfassten Geschwindigkeiten und Stromwerte.

2. Verfahren nach Anspruch 1,
**dadurch gekennzeichnet, dass**
der Motor (3) ausgeschaltet wird, wenn ein Auslösen einer Rutschkupplung (12) der Werkzeugmaschine (1) festgestellt wird.

3. Werkzeugmaschine (1), wobei die Werkzeugmaschine (1)
- einen Motor (3) als Antrieb für die Werkzeugmaschine (1),
- eine Steuerungseinrichtung (4),
- eine Getriebeeinrichtung (5),
- einen ersten Sensor (10) zum Erfassen einer ersten Geschwindigkeit der Getriebeeinrichtung (5),
- einen zweiten Sensor (20) zum Erfassen einer Geschwindigkeit des Motors (3),
- sowie einen dritten Sensor (30) zum Erfassen von Stromwerten umfasst,
**dadurch gekennzeichnet, dass**
die Werkzeugmaschine (1) dazu eingerichtet ist, mit Hilfe der Geschwindigkeits- und Stromwerte, die von den Sensoren (10, 20, 30) erfasst werden, einen Zustand der Werkzeugmaschine zu erkennen.

4. Verfahren nach Anspruch 1 oder 2 oder Werkzeugmaschine nach Anspruch 3
**dadurch gekennzeichnet, dass**
der Zustand der Werkzeugmaschine (1) durch ein Auslösen einer Rutschkupplung (12) der Werkzeugmaschine (1) beeinflusst wird.

5. Werkzeugmaschine (1) nach Anspruch 3 oder 4
**dadurch gekennzeichnet, dass**
die Werkzeugmaschine (1) ein erste Leitung (8) umfasst, die den ersten Sensor (10) mit der Steuerungseinrichtung (4) verbindet.

6. Werkzeugmaschine (1) nach einem der Ansprüche 3 bis 5
**dadurch gekennzeichnet, dass**
die Werkzeugmaschine (1) ein zweite Leitung (9) umfasst, die den zweiten Sensor (20) mit der Steuerungseinrichtung (4) verbindet.

7. Werkzeugmaschine (1) nach einem der Ansprüche 3 bis 6
**dadurch gekennzeichnet, dass**
die Werkzeugmaschine (1) ein dritte Leitung (11) umfasst, die den dritten Sensor (3) mit der Steuerungseinrichtung (4) verbindet.
